# EUROPEAN PATENT APPLICATION

(11) **EP 1 075 113 A2**
(43) Date of publication of application: **07.02.2001**
(21) Application number: 00116190.0
(22) Date of filing: 02.08.2000
(51) Int. Cl.: H04L 12/56

(54) **Exchange and address resolution method**

(30) Priority: 06.08.1999 JP 22402199
(71) Applicant: SONY CORPORATION, Tokyo 141 (JP)
(72) Inventor: Sawatari, Ryusuke, Shinagawa-ku, Tokyo (JP)
(74) Representative: Körber, Martin, Dipl.-Phys.

(57) **Abstract**

An exchange for performing a data exchanging process in a system having a plurality of terminal units each having a data receiving and processing function for receiving data and performing a predetermined process corresponding to the received data and/or a data generating and transmitting function for generating data and transmitting the generated data is disclosed, that comprises a destination representing means for performing a signaling process and an address resolution protocol process corresponding to the received data, a memory for storing information about the operation of the destination representing means, and a data exchanging means, having a plurality of ports for transmitting and/or receiving data, for selecting one of the plurality of ports from which data is transmitted corresponding to the operation result of the destination representing means.

## Description

### BACKGROUND OF THE INVENTION

### Field of the Invention

The present invention relates to an exchange and an address resolution method for use with a label rewrite type data link process in for example ATM (Asynchronous Transfer Mode).

### Description of the Related Art

Unlike with Ethernet or the like, in a data link technology using a label rewrite type transmission system in ATM or the like, an address that directly represents the destination is not contained in a frame (or a cell in ATM) to be transferred. Instead, the destination is represented with a label that identifies a flow (or VPI/VCI in ATM). Thus, on the transmitting side, before data is transmitted, (a) a signaling process for setting the relation between a label and a destination to an exchange should be executed or (b) they should be statically correlated.

On the other hand, when an upper level protocol such as IP is transferred on a data link in ATM, Ethernet, or the like, an address resolution process for correlating an address used in the upper level protocol and an address (or label) used in the data link may be required. In Ethernet, the address resolution process for IP and the transferring process for a packet that is a set of information such as frames are accomplished in a relatively simple method using a broadcast type transferring method.

On the other hand, when "IP over ATM" process that is a standard address resolution method in ATM is performed, a server that accomplishes the address resolution process is required. In addition, a complicated signaling process and a route controlling protocol are required. In this case, the signaling process should be repeatedly performed several times. Thus, in the "IP over ATM" method, the structure of the apparatus becomes complicated. As a result, the process becomes complicated.

As an ATM technology, a method for performing a signaling process and transferring an upper level protocol such as IP without necessity of a complicated route controlling protocol has been proposed (for example, refer to Japanese Patent Laid-open Publication No. 10-173667). However, in such a related art reference, a method for reducing the number of signaling packets that are copied by an exchange is not mentioned. In addition, proxy ARP function for processing an address resolution protocol (ARP) by proxy is not mentioned. Moreover, the related art reference is focused on ATM.

### OBJECTS AND SUMMARY OF THE INVENTION

Therefore, an object of the present invention is to provide an exchange and an address resolution method that allow an upper level protocol such as IP to be effectively transferred in a general label rewrite type data link that is not limited to ATM.

A first aspect of the present invention is an exchange for performing a data exchanging process in a system having a plurality of terminal units each having a data receiving and processing function for receiving data and performing a predetermined process corresponding to the received data and/or a data generating and transmitting function for generating data and transmitting the generated data, comprising a destination representing means for performing a signaling process and an address resolution protocol process corresponding to the received data, a memory for storing information about the operation of the destination representing means, and a data exchanging means, having a plurality of ports for transmitting and/or receiving data, for selecting one of the plurality of ports from which data is transmitted corresponding to the operation result of the destination representing means.

A second aspect of the present invention is an address resolution method for a system having a plurality of terminal units each having a data receiving and processing function for receiving data and performing a predetermined process corresponding to the received data and/or a data generating and transmitting function for generating data and transmitting the generated data, comprising the steps of (a) performing a signaling process and an address resolution protocol process corresponding to the received data, (b) storing information about the process at step (a), and (c) selecting one of a plurality of ports from which data is transmitted corresponding to the result at step (a).

According to the present invention, in association with a process for representing the destination of data to be transmitted, information necessary for performing the address resolution process can be stored in a memory.

These and other objects, features and advantages of the present invention will become more apparent in light of the following detailed description of a best mode embodiment thereof, as illustrated in the accompanying drawings.

### BRIEF DESCRIPTION OF THE DRAWINGS

Fig. 1 is a block diagram showing an example of a network according to the present invention;
Figs. 2A and 2B are schematic diagrams for explaining a pruning process;
Figs. 3A, 3B, and 3C are schematic diagrams showing an example of a packet format corresponding to an embodiment of the present invention;
Figs. 4A, 4B, 4C, and 4D are block diagrams showing an example of the overall structure according to the embodiment of the present invention;
Fig. 5 is a block diagram showing the structure of a portion according to the embodiment of the present invention;
Fig. 6 is a schematic diagram showing an example of entries of a VC table;
Fig. 7 is a flow chart showing an example of an address learning process;
Figs. 8A, 8B, and 8C are schematic diagrams for explaining the address learning process;
Fig. 9 is a schematic diagram for explaining a collision of keys;
Fig. 10 is a schematic diagram for explaining invalidation of learnt information;
Fig. 11 is a schematic diagram for explaining the case that a plurality of protocols that have different address systems operate on the same network according to the present invention;
Fig. 12 is a flow chart for explaining the operation of a terminal unit that transmits an ARP request packet;
Fig. 13 is a flow chart for explaining the operation of a terminal unit that has received an ARP response packet;
Fig. 14 is a flow chart for explaining the operation of a terminal unit that transmits an ARP response packet;
Fig. 15 is a flow chart for explaining the operation of an exchange that has received an ARP request packet;
Fig. 16 is a flow chart for explaining the operation of an exchange that has received an ARP response packet;
Fig. 17 is a schematic diagram showing an example of the operation of a terminal unit that transmits an ARP request packet;
Fig. 18 is a schematic diagram showing an example of the operation of a first exchange corresponding to the ARP request packet shown in Fig. 17;
Fig. 19 is a schematic diagram showing an example of the operation of a second exchange corresponding to the operation of the first exchange shown in Fig. 18;
Fig. 20 is a schematic diagram showing an example of the operation of a third exchange corresponding to the operation of the second exchange shown in Fig. 19;
Fig. 21 is a schematic diagram showing an example of the operation of a terminal unit that transmits an ARP response packet corresponding to an ARP request packet;
Fig. 22 is a schematic diagram showing an example of the operation of the third exchange corresponding to the ARP response packet shown in Fig. 21;
Fig. 23 is a schematic diagram showing an example of the operation of the second exchange corresponding to the operation of the third exchange shown in Fig. 22; and
Fig. 24 is a schematic diagram showing an example of the operation of the first exchange corresponding to the operation of the second exchange shown in Fig. 23.

### DETAILED DESCRIPTION OF THE PREFERRED EMBODIMENTS

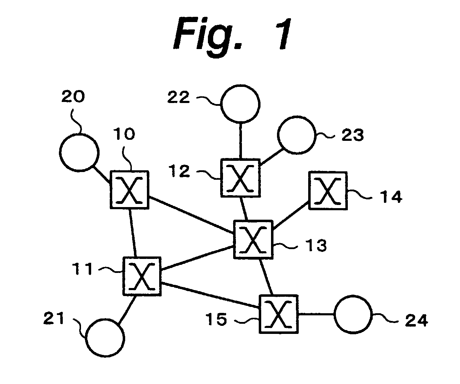

Fig. 1 shows an example of a network of which a plurality of exchanges are connected in a star shape according to the present invention. For example, the network has six exchanges 10, 11, 12, 13, 14, and 15 and five terminal units 20, 21, 22, 23, and 24. According to the present invention, when the network shown in Fig. 1 structures one LAN (Local Area Network), an address resolution process and a packet transmitting/receiving process are performed so as to exchange an upper layer packet such as IP.

The exchanges 10 to 15 shown in Fig. 1 use the label rewrite type transfer method. In other words, each of these exchanges has functions for determining the destination of each cell in ATM or the like corresponding to labels (VPI and VCI) added thereto and for rewriting the labels. In this case, labels added to each cell do not directly represent the address of the destination. Thus, in the conventional transmitting/receiving process, before data is transmitted, it is necessary to perform a signaling process on the transmitting side. However, according to the present invention, the signaling process can be omitted.

On the other hand, in Ethernet, it is possible to structure the network shown in Fig. 1. However, in Ethernet, since a MAC (Media Access Control) address is directly designated rather than exchanging labels, the present invention is not applied to Ethernet. However, when labels are added to each frame using MPLS (Multi-Protocol Label Switching) technology or the like, the present invention can be applied to Ethernet.

When the topology of a standard star type network is considered, a loop will take place in the connections of exchanges. For example, in the example of the network shown in Fig. 1, the exchanges 10, 11, and 13 forms a loop. In addition, the exchanges 11, 13, and 15 form a loop. As will be described later, when a loop takes place in a network, packets may be endlessly transferred in the process according to the present invention. To solve such a problem beforehand, it is preferred to prune branches using spanning tree algorithm or the like before the present invention is applied.

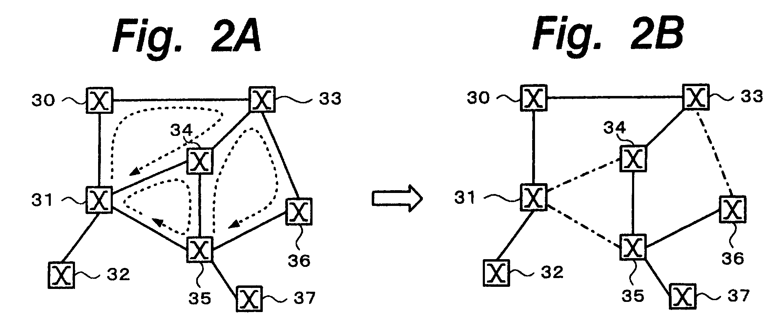

Figs. 2A and 2B show an example of the pruning process. Fig. 2A shows an example of a network having loops. The network shown in Figs. 2A and 2B has eight exchanges 30, 31, 32, 33, 34, 35, 36, and 37. In Fig. 2A, as represented by arrows with dotted lines, the exchanges 30, 31, 34, and 33 form a loop; the exchanges 31, 34, and 35 form a loop; and the exchanges 34, 33, 36, and 35 form a loop. In this case, when the connection between the exchanges 31 and 34, the connection between the exchanges 31 and 35, and the connection between the exchanges 33 and 36 are removed, the loops can be removed as shown in Fig. 2B. In Fig. 2B, the removed connections are represented by dashed lines. Since the pruning method corresponding to the spanning tree algorithm is well known, the description thereof is omitted. In the following description, it is assumed that the pruning process has been performed in a network and loops have been removed therefrom.

Next, a packet format according to an embodiment of the present invention will be described. In the following description, a packet is a data transfer unit in a data link. In ATM, a packet is equivalent to an ATM cell. In Ethernet, a packet is equivalent to an Ethernet frame. According to the present invention, the total packet length is not limited. In addition, the packet length may be a fixed length or a variable length. In ATM, the packet length is for example 53 bytes in fixed length.

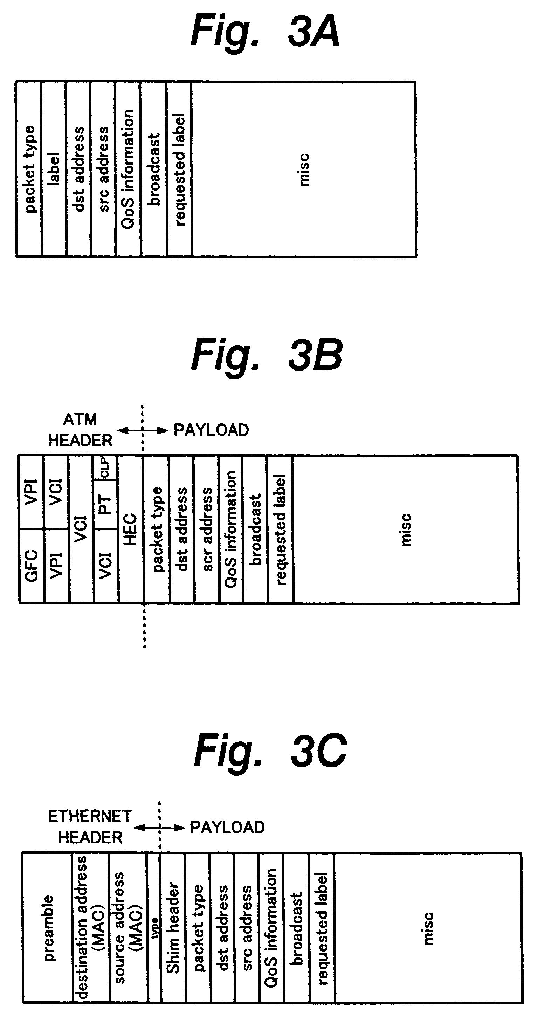

According to the present invention, the boundary between a header and a payload is not limited. As shown in Fig. 3A, a packet is divided into a packet type field, a label field, a dst address field, a src address field, a QoS information field, a broadcast field, a requested label field, and a misc field. The length and position of each of these fields are not limited. In addition, it is not limited which fields of a packet are contained in a packet header (or a packet trailer). In ATM, the label field is contained as VPI/VCI in the header. However, since the dst address field and the src address field are not contained in the conventional ATM cell header, they are contained in the payload portion. In addition, it is not necessary to contain all the above-mentioned fields in one packet. In other words, when necessary, some fields may be excluded from one packet. In reality, a conventional data packet that does not relate to the ARP does not mostly contain the fields shown in Fig. 3A.

Next, the individual fields shown in Fig. 3A will be described. The packet type field represents the type of the packet. In addition, the packet type field explicitly or implicitly represents the types of fields contained in the packet. Moreover, the packet type represents whether the current packet is an ARP response packet, an ARP request packet, or a normal data packet. Furthermore, the packet type represents to what upper level layer the dst address or src address belongs.

The label field represents information for identifying to what flow the current packet belongs. The label field may be changed whenever the current packet passes through an exchange. In ATM, the label field is equivalent to VPI/VCI. A flow identified by the label field is hereinafter referred to as VC (Virtual Channel). As will be described later, VC is a term used in ATM. However, in the following description, VC stands for a flow identified by the label field.

The dst address field represents the address of a terminal unit that receives the packet or an upper level address of a proxy terminal unit in the case of proxy ARP. For example, the dst address field represents an IP address of a terminal that receives the packet. On the other hand, the src address field represents the address of a terminal unit that has transmitted the packet or an upper level address of a proxy terminal unit in the case of proxy ARP. For example, the src address field represents an IP address of a terminal unit that has transmitted the packet.

The QoS information field represents information (band, delay, and so forth) about QoS that is designated to a newly established VC. The broadcast field represents a flag designated in the case that the current packet is an ARP request packet. This flag is normally off. When a packet is broadcast by each exchange (without using the learning function), this flag is turned on (this operation will be described later). The requested label field represents a label of VC that is designated in the signaling process. The misc field represents other data. The msci field may be blank.

In an ATM cell of up to 53 bytes, when the packet length exceeds a particular value as shown in Fig. 3A, one packet may not be contained in one cell. In such a case, a proper mapping method of which a sequence composed of one or more cells is treated as a packet shown in Fig. 3A is used. In the following description, such a cell sequence is referred to as "packet". In the following description, "transmitting process" means a process for dividing a packet into a sequence of cells and transmitting all the cells, whereas "receiving process" means a process for receiving a sequence of cells that compose a packet and reassembling the received cells.

Fig. 3B shows an example of an ATM packet format in comparison with the packet format shown in Fig. 3A. Referring to Fig. 3B, an ATM packet is composed of an ATM header and a payload portion. The ATM header contains a GFC field, a VPI field, a VCI field, and an HEC field. The payload portion contains a packet type field, a dst address field, a src address field, a QoS information field, a broadcast field, and a requested label field. In addition, the payload portion contains a misc field. The GFC (Generic Flow Control) field represents information about a normal flow control. The VPI (Virtual Path Identifier) field represents information for identifying a virtual path. The VCI (Virtual Channel Identifier) field represents information for identifying a virtual channel. As was described above, the VPI field and the VCI field are equivalent to the label field shown in Fig. 3A. The HEC (Header Error Control) field represents information about an error control of the header.

Fig. 3C shows another example of a packet format in Ethernet corresponding to MPLS in comparison with the packet format shown in Fig. 3A. Referring to Fig. 3C, one packet is composed of an Ethernet header portion and a payload portion. The Ethernet header portion contains a preamble field, a destination address (MAC) field, a source address (MAC) field, and a type field. The payload portion contains a shim header field, a packet type field, a dst address field, a src address field, a Qos information field, a broadcast field, a requested label field, and a misc field. In the packet, a label represented in the shim header field is equivalent to the label field shown in Fig. 3A.

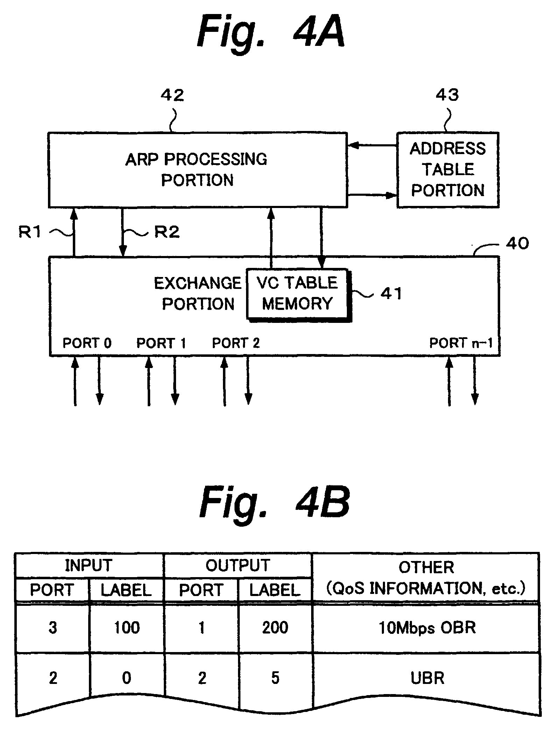

Fig. 4A shows an example of the overall structure of the embodiment of the present invention. In Fig. 4A, an exchange portion 40 is equivalent to a switching fabric in an ATM exchange. The exchange portion 40 performs an exchanging process for changing a label of a packet that is input from a port and outputting the resultant packet to another port. The exchange portion 40 has a VC table memory 41. The VC table memory 41 stores a VC table having VC information of input/output ports, labels, and so forth. Fig. 4B shows an example of the VC table. Referring to Fig. 4B, the VC table has an input port field, an input label field, an output port field, an output label field, and an misc field (QoS information and so forth). The input port field, the input label field, the output port field, the output label field, and the misc field are denoted by i, M, j, L, and Q, respectively. An entry identified by a combination of these fields can be denoted by (i, M, j, L, Q). In Fig. 4B, CBR stands for Constant Bit Rate; and UBR stands for Unspecified Bit Rate.

The exchange portion 40 is connected to an ARP processing portion 42. An ARP packet is transmitted and received between the exchange portion 40 and the ARP processing portion 42. In Fig. 4A, the transmission path and the reception path are denoted by R1 and R2, respectively. An address table memory 43 is also connected to the ARP processing portion 42. The address table memory 43 stores an address learning table. The address learning table has information representing the relation between ports of an exchange portion (the exchange portion 40 shown in Fig. 1) corresponding to the ARP processing portion (the ARP processing portion 42 in Fig. 4A) that manages the table and the individual terminal units of the system.

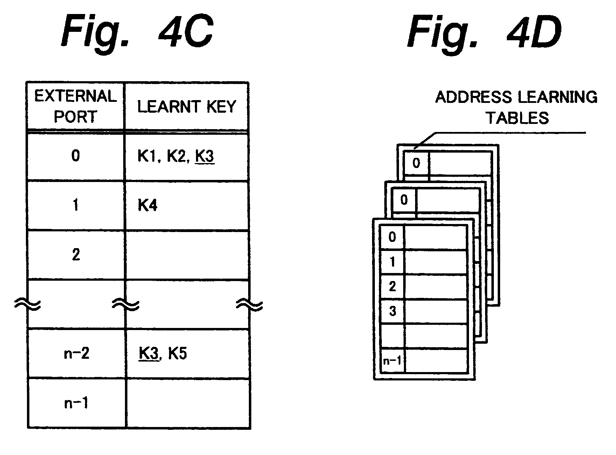

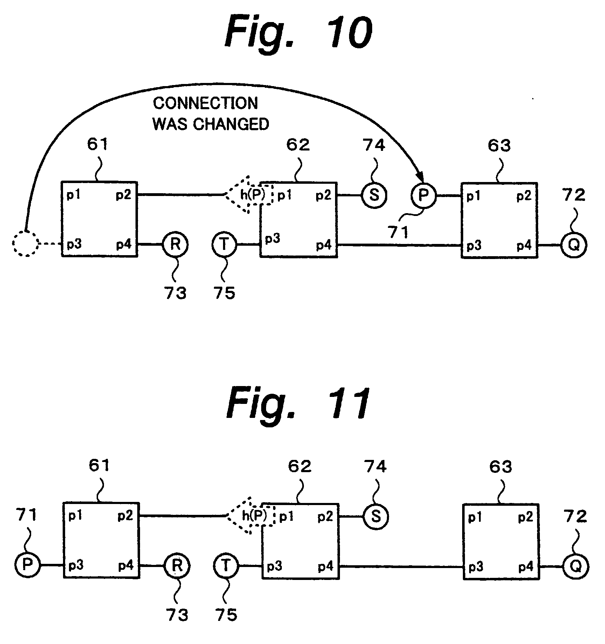

In the case of an exchange having n external ports 0, 1, 2, ..., and n-1, the address learning table has data of an upper level address of a terminal unit connected each port. In reality, the address learning table has data representing the relation of a key corresponding to each upper level address and each port (refer to Fig. 4C). In this example, a key corresponding to the external port 0 and a key corresponding to the external port n-2 contain a key K3 (denoted by an underline). This situation is referred to as a collision of keys (the detail will be described later). The address table memory 43 stores a plurality of address learning tables (refer to Fig. 4D). This is because when a plurality of ARPs are processed on upper layers, tables corresponding to the individual protocols should be managed (the detail will be described later with reference to Fig. 10).

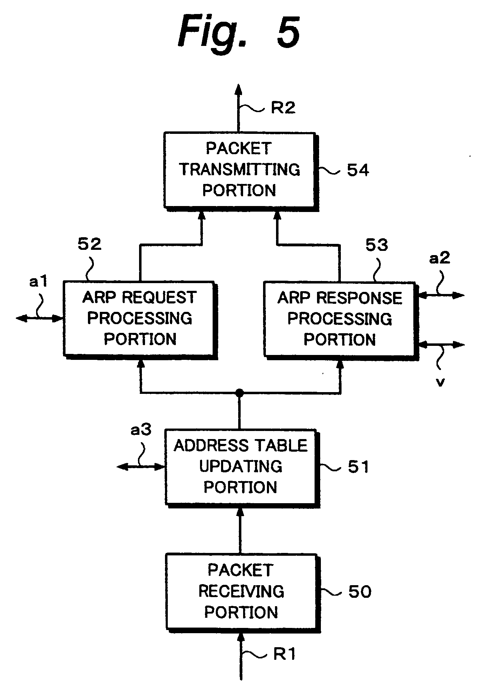

When necessary, the ARP processing portion 42 references and updates VC tables and address learning tables. Next, with reference to Fig. 5, the ARP processing portion 42 will be described in detail. The ARP processing portion 42 has a packet receiving portion 50, an address table updating portion 51, an ARP request processing portion 52, an ARP response processing portion 53, and a packet transmitting portion 54. As was described above with reference to Fig. 4A, the packet receiving portion 50 and the packet transmitting portion 54 transmit and receive a packet to/from the exchange portion 40 through the paths R1 and R2, respectively. In the ATM system or the like, when one packet cannot be transmitted with one cell, the packet receiving portion 50 performs a reassembling process; and the packet transmitting portion 54 performs a segmenting process.

The address table updating portion 51 learns an address corresponding to a transmission source address contained in a received ARP packet so as to update an address learning table (a communication with the address learning table is denoted by an arrow with letter a3). The ARP request processing portion 52 performs a process corresponding to the case that the received packet is an ARP request packet. In other words, the ARP request processing portion 52 references an address learning table (a communication with the address learning table is denoted by an arrow with letter a1) and transfers a packet. In addition, the ARP response processing portion 53 performs a process corresponding to the case that the received packet is an ARP response packet (communications with an address table and a VC table are denoted by arrows with letters a2 and v, respectively) and transfers the packet.

Next, a connection between the ARP processing portion 42 and the exchange portion 40 will be described in detail. As a first connecting method, the ARP processing portion 42 and the exchange portion 40 are connected through an external port and an internal port of the exchange portion 40. In this case, the external port and the internal port are functionally the same. The exchange portion 40 exchanges a packet between the external port and the internal port in the same manner as the packet is switched therebetween corresponding to the VC table. In this case, the VC table should satisfy the following three conditions.

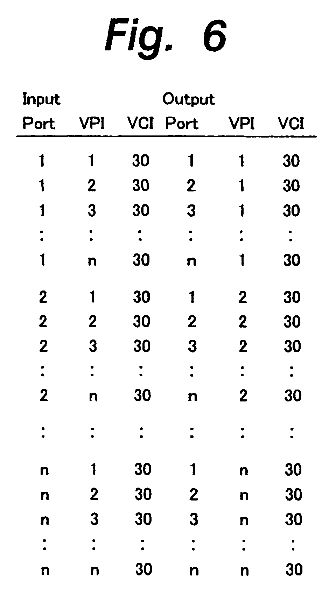

Firstly, it is necessary to identify from what port of the exchange portion 40 the packet has been received by the packet receiving portion 50. Secondly, the ARP packet that has been received by the exchange portion 40 should be correctly sent to the ARP processing portion 42. Thirdly, a port of the exchange portion 40 should be able to be designated for a packet transmitted from the packet transmitting portion 54. Fig. 6 shows an example of the VC table that satisfies such three conditions. The VC table has a receiving port field, a receiving VPI field, a receiving VCI field, a transmitting port field, a transmitting VPI field, and a transmitting VCI field. When the first connecting method is used, an ARP packet is transmitted and received with a VC corresponding to a predetermined label (for example, label = 5) between a terminal unit and an exchange or among a plurality of exchanges.

As a second connecting method, the ARP processing portion 42 and the exchange portion 40 are connected through an external port and an internal port. In this case, the external port is functionally different from the internal port. In the second connecting method, a packet is exchanged between an external port and an internal port without reference to a VC table. When the packet type of a packet that is received at an external port is an ARP packet, the packet is directly transmitted to the ARP processing portion 42 without reference to the VC table. A port at which a packet is received and a port from which a packet is transmitted are represented by dedicated signals.

When the second connecting method is used, since the switching process is performed without the VC table, the ARP processing portion 42 can process an ARP packet in the following various situations.
(1) An entry corresponding to a label field of an ARP packet is not contained in the VC table.
(2) A label field is not contained in an ARP packet.
(3) Although an entry corresponding to a label field of an ARP packet is contained in the VC table, the ARP packet is transferred along with normal data.

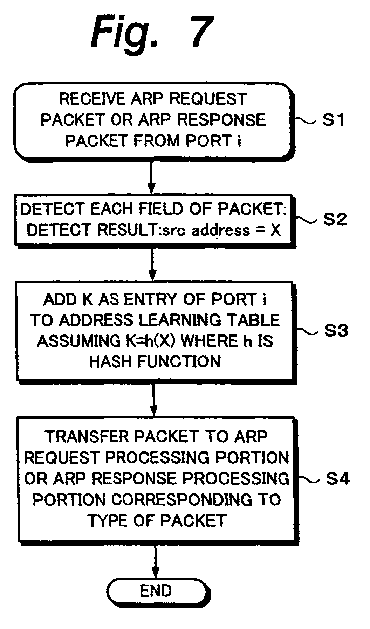

Next, the process performed by an exchange will be described. Fig. 7 is a flow chart showing an example of an address learning process. At step S1, an ARP request packet or an ARP response packet is received from an i-th port i of the exchange portion 40. At step S2, each field of the received ARP packet is detected. In this example, it is assumed that the src address field of the received packet is X. At step S3, a Hash value K = h(X) is calculated corresponding to an address X using a predetermined Hash function h. The calculated value K is added as an entry of the port i to the address learning table. The Hash value K is referred to as key.

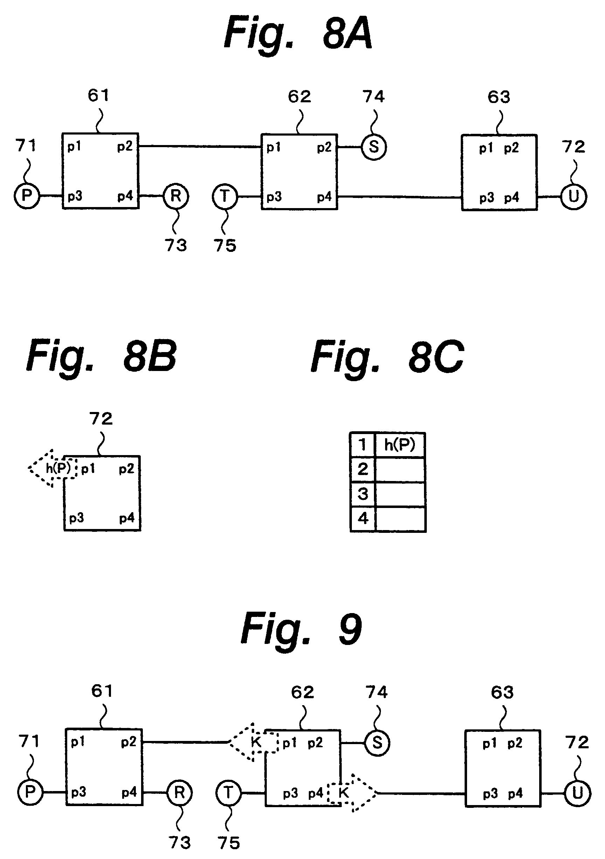

Next, with reference to Figs. 8A, 8B, and 8C, a data process corresponding to the above description will be described. Fig. 8A shows an example of a network having three exchanges 61, 62, and 63 and terminal units 71, 72, 73, 74, and 75. Although the structure of each exchange has been described with reference to Fig. 4A, in this example, the number of ports of each exchange is four. In other words, each of the exchanges 61, 62, and 63 has four ports p1, p2, p3, and p4. The terminal units 71, 72, 73, 74, and 75 are assigned addresses P, U, R, S, and T, respectively.

Next, the operation of the exchange 62 will be described. When the exchange 62 receives a packet transmitted by the terminal unit 71 from the port p1 through the exchange 61, the exchange 62 adds a key calculated with the address P of the terminal unit 71 as an entry of the port p1 to the address learning table. Fig. 8B shows the case that a key K = h(P) is added to the address learning table. In Fig. 8B, the key K = h(P) is denoted by an arrow with a dotted line on the port p1. Fig. 8C shows the address learning table in the exchange 62 in the case that key K = h(P) is added. Thus, in Fig. 8C, keys of the addresses of the ports p2, p3, and p4 have not been added. In the state of the address learning table shown in Fig. 8C, when a packet addressed to the terminal unit 71 (address P) (namely, the dst address field of the packet is P) is received, the exchange 62 transfers the packet to the terminal unit 71 through the port p1.

When a Hash function value corresponding to an address is registered as a key to the address learning table, even if various upper level addresses that differ in address lengths (for example, IPv4 and IPv6) are learnt, the information amount per terminal unit registered to the address learning table becomes the same. For example, when a byte sequence of an argument is exclusively-ORed every two bytes and a function for returning the calculated result as a function value is used as a Hash function h, a key is generated in the following manner.
(Example 1) When an upper level address is an address of IPv4,
   address: 172. 10. 2. 65
   key: h(172. 10. 2. 65)
   = h(0xac0a0241)
   = 0xac0a ^ 0x0241
   = 0xae4b
(Example 2) When an upper level address is an address of IPv6,
   address: 3f00:501:100e:5310:2a0:24ff:fe48:7a3e
   key: h(3f00:501:100e:5310:2a0:24ff:fe48:7a3e)= 0xdbc5

As shown in examples 1 and 2, regardless of the lengths of upper level addresses, the length of each key becomes 2 bytes. It should be noted that the function used as the function h is not limited to the above-described examples. For example, as the function h, when an identity function is used, an upper level address can be registered to the address learning table as it is.

Next, a problem that takes place in such an address learning process will be described. First of all, a problem that takes place in a method for registering a key calculated corresponding to an address using the Hash function or the like to an address learning table will be described. In this case, there is a probability of which two different addresses are mapped to the same key (namely, h(X) = h(Y) where X and Y are different addresses). Such a situation is referred to as a collision of keys.

Next, the collision of keys will be described in reality. When the same key K = h(P) = h(U) is registered as entries of the ports p1 and P4 for the addresses P and U of the terminal units 71 and 72 (refer to Fig. 9), it cannot be determined to which of the ports p1 and p4 a packet addressed to the terminal unit 71 (namely, the address P) should be transferred. In addition, as a more critical problem, when the exchange 62 has learnt only the address P for the terminal unit 71, the exchange 62 may mistakenly transfer a packet addressed to the terminal unit 72 (namely, the address U) to the port p1.

As a first method for solving such problems, different Hash functions may be used for individual exchanges. For example, in a situation that a collision of keys may take place, when a Hash function h' that is different from the Hash function h is used for the exchange 61, the probability of which h'(P) is different from h(U) is very high. Thus, even if the exchange 62 mistakenly transfers a packet addressed to the terminal unit 74 (namely, the address U) to the terminal unit 71 (namely, the address P), the exchange 61 prevents the packet from being transferred to the terminal unit 71.

As a second method for solving such problems, when a collision of keys is detected, all entries of the address learning table are deleted and then the Hash function is changed. To prevent a collision of keys from taking place, the lengths of keys can be increased. As the lengths of keys are large, the probability of which problems due to a collision of keys are solved becomes high. However, when the lengths of keys are small, the storage capacity of the memory is small. Thus, in consideration of such an advantage, the lengths of keys should be optimally designated.

Next, a problem of which learnt information is invalidated will be described. Such a problem takes place when the network structure is changed (for example, the connection of a terminal unit is changed from one exchange to another exchange). For example, in Fig. 8A, when the connection of the terminal unit 71 is changed from the exchange 61 to the exchange 63 (refer to Fig. 10), information that was learnt when the terminal unit 71 was connected to the exchange 61 (namely, the contents of the address learning table (refer to Fig. 8C) becomes invalid. In other words, when a packet is transmitted to the terminal unit 71 corresponding to the learnt information, a malfunction takes place. To deal with such a problem of which learnt information becomes invalid, a method for deleting a key that has registered and elapsed for a predetermined time period may be used.

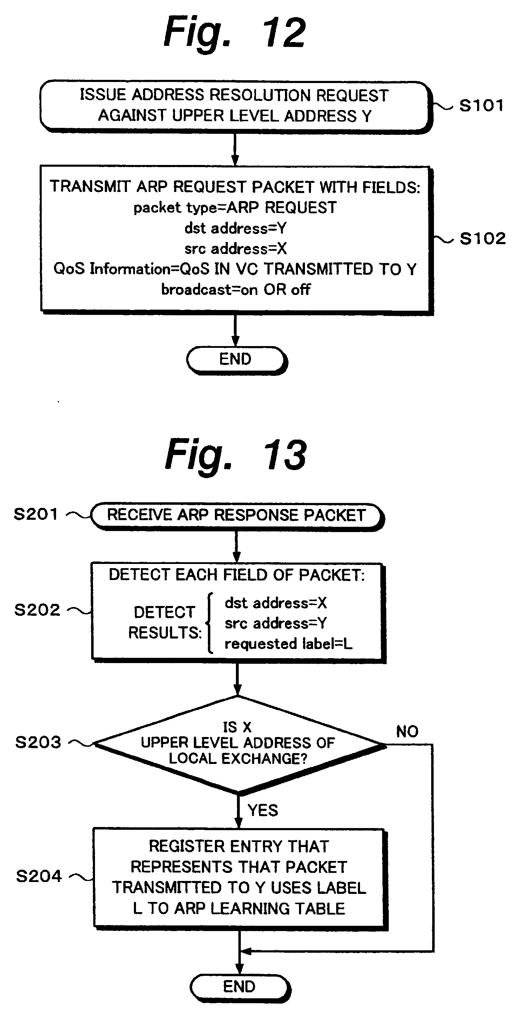

When a plurality of protocols that have different address systems as upper layers operate on the same network, it is necessary to provide a plurality of address learning tables. For example, in the network structure shown in Fig. 8A, when the terminal units 71, 72, and 74 operate corresponding to IP and the terminal units 73 and 75 (that are shaded) operate corresponding to another protocol, it is necessary to use at least two address learning tables (refer to Fig. 11).

Next, the address resolution protocol will be described. First of all, the operation of a terminal unit that issues an ARP request packet will be described with reference to Fig. 12. When an address resolution request is issued against an upper level address Y at step S101, an ARP request packet is transmitted at step S102. To do that, each field is designated as follows. The packet type field is ARP request; the dst address field is Y; the src address field (the upper level address of the terminal unit) is X; the QoS information field is QoC in VC transmitted to Y; and the broadcast field is on or off.

Next, the operation of a terminal unit that has received an ARP response packet will be described with reference to Fig. 13. At step S201, an ARP response packet is received. At step S202, each field of the ARP response packet received at step S201 is detected. As the detected results, it is assumed that the dst address field is X; the src address field is Y; and the requested label is L. At step S203, it is determined whether or not the dst address X is an upper level address of the exchange that has received the ARP response packet. When the determined result at step S203 (namely, the dst address X is an upper level address of the exchange that has received the ARP response packet), the flow advances to step S204. Otherwise, the process is completed. Thus, the terminal unit can be prevented from performing a process corresponding to the mistakenly received ARP response packet.

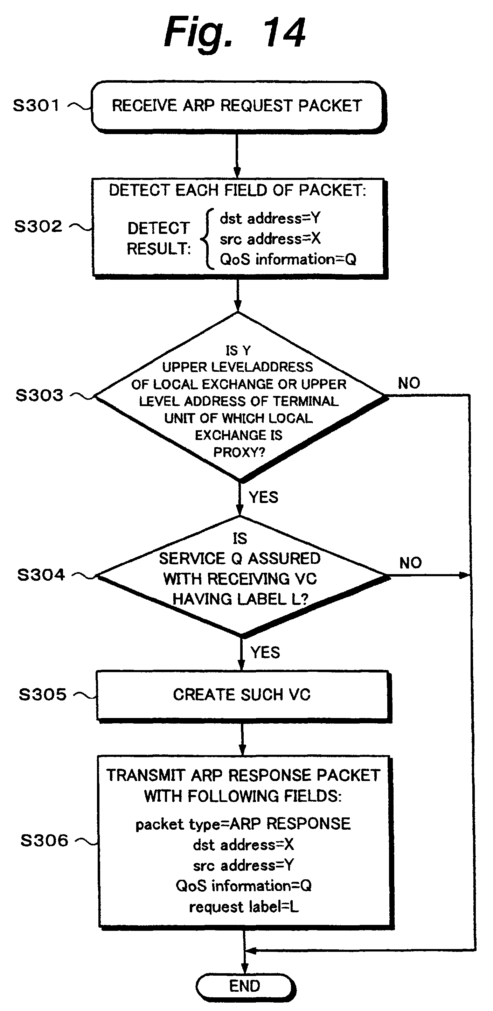

At step S204, an entry that represents that when a packet is transmitted to the address Y, the label L is used is registered to the ARP learning table. Next, the operation of a terminal unit that issues an ARP response packet will be described with reference to Fig. 14. At step S301, an ARP request packet is received. At step S303, each field oF the ARP request packet is detected. As the detected results, it is assumed that the dst address field is Y; the src address field is X; and the QoS information field is Q.

At step S303, it is determined whether or not the dst address Y is an upper level address of the exchange that has received the ARP request packet or an upper level address of a terminal unit of which the exchange that has received the ARP request packet is a proxy. When the determined result at step S302 is Yes (namely, the dst address Y is an upper layer address of the exchange that has received the ARP request packet or an upper level address of a terminal unit of which the exchange that has received the ARP request packet is a proxy), the flow advances to step S304. Otherwise, the process is completed. Thus, the terminal unit is prevented from performing a process corresponding to a mistakenly received ARP request packet.

At step S304, it is determined whether or not a service Q can be assured with a receiving VC having a label L. When the determined result at step S304 is Yes (namely, a service Q can be assured with a receiving VC having a label L), the flow advances to step S305. Otherwise, the process is completed. At step S305, a VC corresponding to the determined condition at step S304 is generated. Thereafter, the flow advances to step S306. At step S306, an ARP response packet with the following fields is transmitted.

In this example, the packet type field is ARP response; the dst address field is X, the src address field is Y; the QoS information field is Q; and the requested label field is L. The terminal unit side opens a receiving VC that assures the required QoS and sends back an ARP response packet with the label.

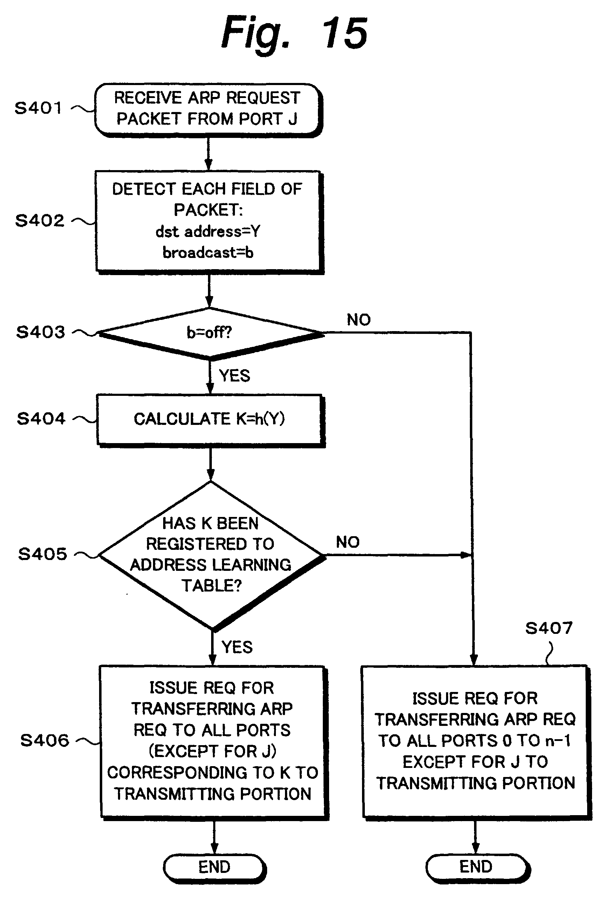

Next, with reference to Fig. 15, the operation of an exchange that has received an ARP request packet will be described. An ARP request packet that has been issued by a terminal unit (refer to Fig. 12) is received from a port j (that is one of ports 1, 2, ..., and (n-1)) to the exchange portion 40. Thereafter, the ARP request packet is received by the ARP processing portion 42 through the path R1. Thereafter, the ARP request packet is received by the ARP request processing portion 52 through the packet receiving portion 50 and the address table updating portion 51 (at step S401).

At step S402, each field of the ARP request packet is detected. In this example, it is assumed that the dst address field is Y and the broadcast field is b. At step S403, it is determined whether or not b is off. When the determined result at step S403 is Yes (namely, b = off), the flow advances to step S404. Otherwise, the flow advances to step S407. The broadcast field will be described later.

At step S404, with dst address = Y detected at step S402, a key K is calculated as K = h(Y) using the Hash function h. At step S405, it is determined whether or not the key K has been registered to the address learning table. When the determined result at step S405 is Yes (namely, the key k has been registered to the address learning table), the flow advances to step S406. Otherwise, the flow advances to step S407. At step S406, a request for transferring an ARP request packet to a part corresponding to the key K is issued to the packet transmitting portion 54. As was described above, there may be a plurality of ports corresponding to the key K. In such a case, a request for transferring an ARP request packet to all the ports (except for the port j) corresponding to the key K is issued to the packet transmitting portion 24. After step S406, the process is completed.

On the other hand, at step S407, a request for transferring an ARP request packet to all the ports (except for the port j) of the exchange portion 40 is issued to the packet transmitting portion 54. After step S407, the process is completed. As the result of steps S405, S406, and S407, the following process is performed.
(a) When a key calculated with the dst address has been learnt (registered to the address learning table), an ARP request packet is transferred to all ports corresponding to the key.
(b) When a key calculated with the dst address has not been learnt (not registered to the address learning table), an ARP request packet is copied and transferred to all ports.

In each of the cases (a) and (b), a packet is not sent back to the port j to which an ARP request packet has been received.

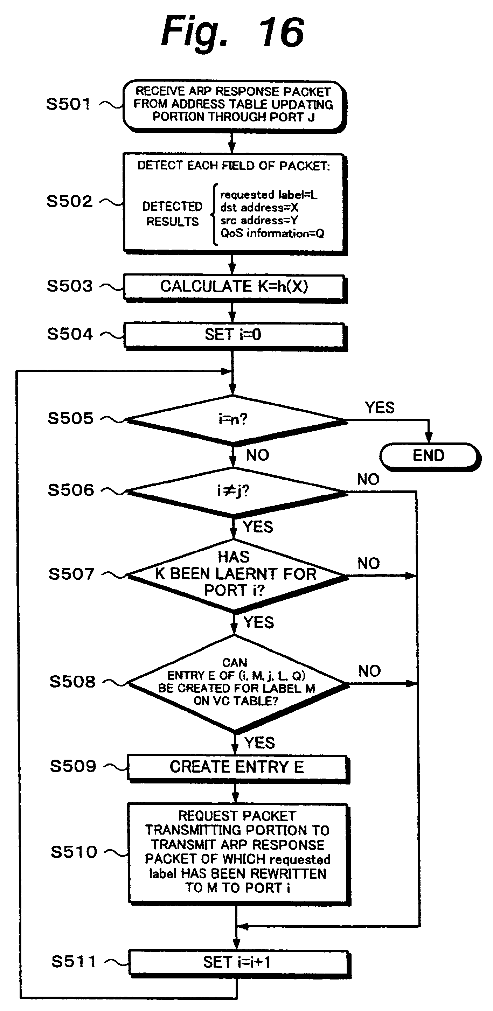

Next, the operation of an exchange that has received an ARP response packet will be described with reference to Fig. 16. An ARP response packet that has been issued from a terminal unit (refer to Fig. 14) is received by the exchange portion 40. Thereafter, the ARP response packet is received by the ARP processing portion 42 through the path R1. Thereafter, the ARP response packet is received by the ARP response processing portion 53 through the packet receiving portion 50 and the address table updating portion 51 (at step S501). At step S502, each field of the ARP response packet is detected. As the detected results, it is assumed that the request label field is L; the dst address field is X; the src address field is Y; and the QoS Information field is Q. At step S503, a key K is calculated as K = h(X) using the Hash function h.

At step S504, a variable i is initialized to 0 (namely, i = 0). At step S505, it is determined whether or not i = n. In this example, n represents the number of ports of the exchange portion 40. When the determined result at step S505 is Yes (namely, i = n), the process is completed. Otherwise, the flow advances to step S506. At step S506, it is determined whether or not i is different from j. When the determined result at step S506 is Yes (namely, i is different from j), the flow advances to step S507. Otherwise, the flow advances to step S511. At step S507, it is determined whether or not the key K has been learnt for the port i. When the determined result at step S507 is Yes (namely, the key K has been learnt for the port i), the flow advances to step S508. Otherwise, the flow advances to step S511.

At step S508, it is determined whether or not an entry E of (i, M, j, L, Q) for a particular level M can be created on the VC table. When the determined result at step S508 is Yes (namely, the entry E can be created on the VC table), the flow advances to step S509. At step S509, the entry E is created. Otherwise, the flow advances to step S511. After step S509, the flow advances to step S510. At step S510, a process for requesting the packet transmitting portion 54 to transmit an ARP response packet of which the requested label field has been changed to M to the port i is performed. Thereafter, the flow advances to step S511. At step S511, the value of the variable i is incremented by 1 (namely, i = i + 1). Thereafter, the flow advances to step S505. Thus, with the incremented value of the variable i, the loop starting at step S505 is performed.

In such a manner, when the ARP response processing portion 53 receives a packet, it performs a routing process for transferring the packet to a port corresponding to the dst address of the packet. In addition, the ARP response processing portion 53 designates a VC. In other words, for all ports i (except for the port j) of which the key calculated with the dst address has been learnt, a new VC that connects the port i and the port j is created. In addition, the requested label field of the ARP response packet is rewritten and transferred. When no VC can be created, no operation is performed.

In the process described with reference to Fig. 16, when a collision of keys takes place, a VC that includes unnecessary branches of multiple points to one point may be created. However, the influence of such a problem can be alleviated when the above-described method for preventing a collision of keys is used. Even if a collision of keys actually takes place, when a structure or a function that allows a branch that has not served for transferring data such as a packet for a predetermined time period to be deleted is used, the problem of which the operation deteriorates due to a collision of keys can be prevented or alleviated.

Next, the broadcast field will be described. When a terminal unit that has issued an ARP request packet, if it does not receive an ARP response packet, the following reasons can be considered.
(1) There is no terminal unit that has a requested upper level address in the system.
(2) Due to a trouble that takes place when a packet is transmitted, an ARP request packet or an ARP response packet is lost.
(3) Since learnt information has been invalidated, a packet is transferred in an incorrect direction.
(4) Due to a collision of keys, a packet is transferred in an incorrect direction.

To solve the troubles that take place due to the reasons (2), (3), and (4), an ARP packet can be re-transmitted on the terminal unit side. In addition, to solve the problems that take place due to the reasons (3) and (4), all packets can be forcedly broadcast without use of learnt information. To perform such a controlling process, the broadcast field is used. In other words, the broadcast field is normally turned off. Only when all packets are forcedly broadcast, the broadcast field is turned on. Thus, the problems that take place due to the reasons (3) and (4) can be solved.

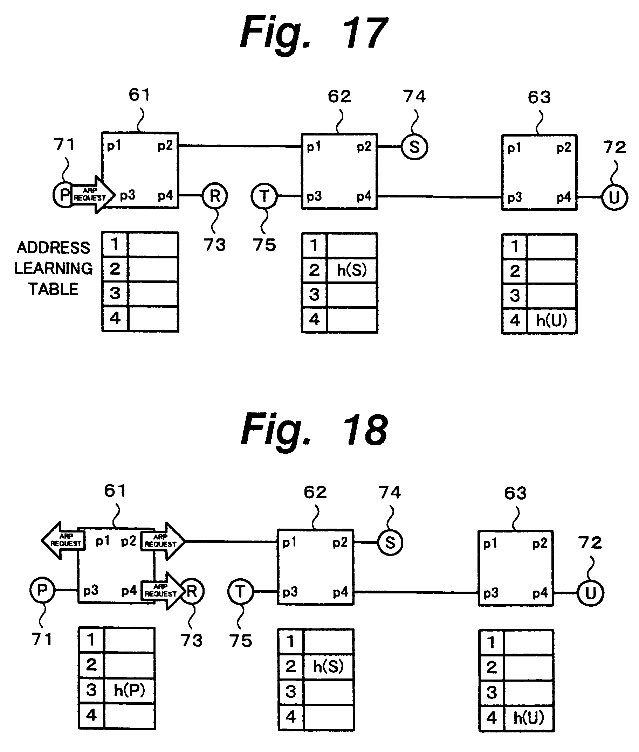

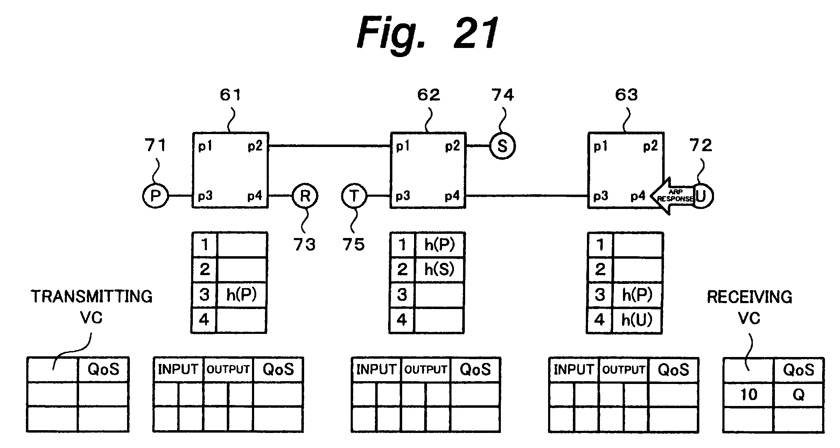

Next, an example of the operation of the address resolution protocol according to the embodiment of the present invention will be described. Figs. 17 to 24 show an example of the operation of which the terminal unit 71 issues an ARP request to the terminal unit 72 and the terminal unit 72 receives an ARP response corresponding to the ARP request from the terminal unit 71 in the case that they are structured as shown in Fig. 8A. In this example, it is assumed that each of the exchanges 61, 62, and 63 uses the same Hash function h. In Figs. 17 to 24, the exchanges 61, 62, and 63 are shown along with address learning tables thereof. In Figs. 21 to 24, VC tables corresponding to the exchanges 61, 62, and 63 and the terminal units 71 and 72 are shown below the address learning tables. The VC tables on the exchange side have been described with reference to Fig. 4B. The VC tables on the terminal unit side contain VC information created for receiving and transmitting packets.

With reference to Figs. 17 to 20, the operation of the terminal unit 71 that issues an ARP request packet to the terminal unit 72 will be described. In the initial state, a key corresponding to an address S has been learnt in the exchange 62. A key corresponding to an address U has been learnt in the exchange 63. No key has been learnt in the exchange 61. Firstly, the terminal unit 71 transmits an ARP request packet addressed to the terminal unit 72 (refer to Fig. 17). At this point, since a key corresponding to the address U of the terminal unit 72 has not been learnt in the terminal unit 72, the ARP request packet is transmitted to all ports p1, p2, and p4 (except for the port p3 connected to the terminal unit 71) (refer to Fig. 18).

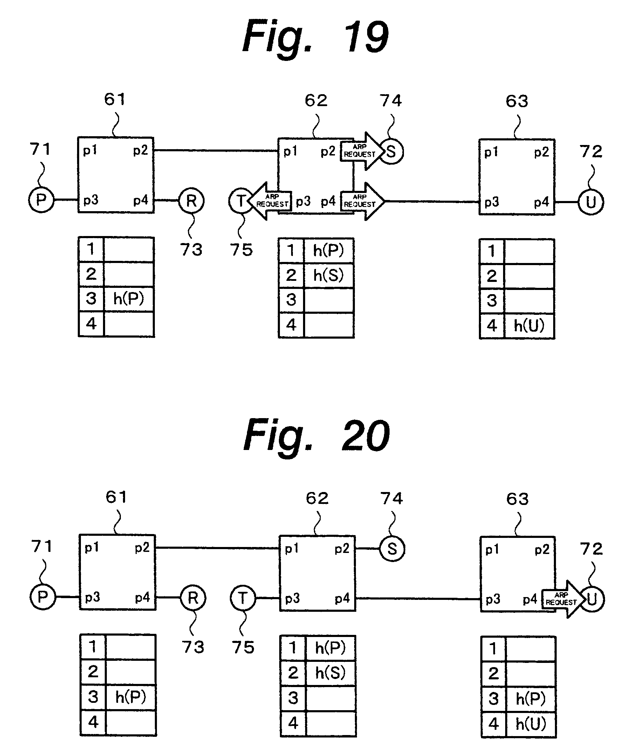

Thus, the APR request packet is also transferred to the terminal unit 73 through the port p4. Since the address (R) of the terminal unit 73 is different from the destination address (U), the terminal unit 73 determines that the APR request packet is not a packet addressed to the terminal unit 73 and destroys it. The ARP request packet is also transferred to the exchange 62 through the port p2. Since a key corresponding to the address U of the terminal unit 72 has not been learnt in the exchange 62, the exchange 62 transmits the ARP request packet to all ports p2, p3, and p4 (except for the port p1 connected to the exchange 61 (refer to Fig. 19).

Thus, the ARP request packet is also transferred to the terminal unit 74 through the port p2 of the exchange 62. However, since the address (S) of the terminal unit 74 is different from the destination address (U), the terminal unit 74 determines that the ARP request packet is a packet addressed to the terminal unit 74 and destroies it. In addition, the ARP request packet is also transferred to the terminal unit 75 through the port p3. However, since the address (T) is different from the destination address (U), the terminal unit 75 determines that the ARP request packet is not a packet addressed to the terminal unit 75 and destroies it. In addition, the ARP request packet is also transferred to the exchange 63 through the port p4.

Since a key corresponding to the address U of the terminal unit 72 has been learnt in the exchange 63, the exchange 63 transmits the ARP request packet to only the port p4 connected to the terminal unit 72 (refer to Fig. 20). In the operations shown in Figs. 17 to 20, the address P of the source terminal unit 71 has been learnt in the exchanges 61, 62, and 63 that has transmitted and received the ARP request packet. Thus, the amount of learnt information in the exchanges 61, 62, and 63 (refer to the address learning table shown in Fig. 20) is larger than that in the initial state (refer to the address learning tables shown in Fig. 17).

Next, with reference to Figs. 21 to 24, the operation of the terminal unit 72 that issues an ARP response packet to the terminal unit 71 will be described. As was described with reference to Figs. 17 to 20, since the destination address of the ARP request packet is the address (U) of the terminal unit 72, it transmits an ARP response packet as a reply of the ARP request packet to the terminal unit 71. At this point, the terminal unit 72 creates a receiving VC. Since the label of the created VC is 10, the requested label field of the ARP response packet is 10 (refer to Fig. 21). Figs. 21 to 24 each show a VC table below the terminal unit 72. The VC table has a VC of the terminal unit 72.

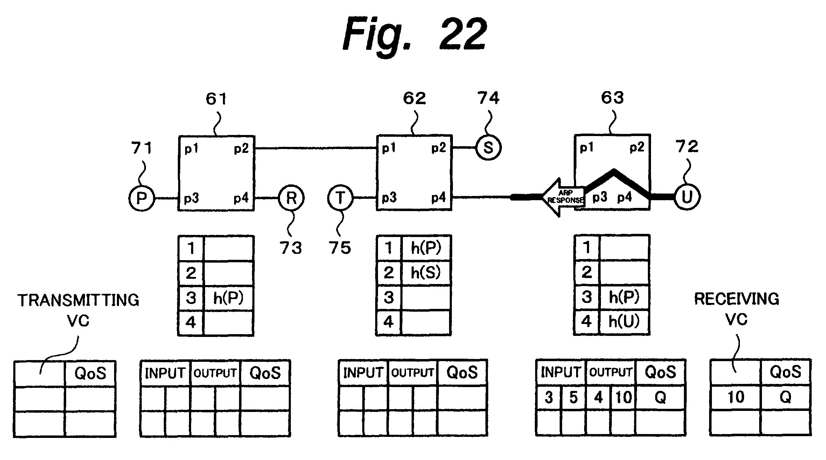

The exchange 63 receives the ARP response packet from the terminal unit 72 through the port p4. Since a key corresponding to the address P of the terminal unit 71 has been learnt in the exchange 63, it transmits the ARP response packet to only the port p3 connected to the terminal unit 72. In this case, since a VC of (3, 5, 4, 10, Q) is created, the requested level field of the transferred ARP response packet is 5 (refer to Fig. 22). In Figs 21 to 24, transmission paths for the ARP response packet are denoted by solid lines. Thus, the ARP response packet is transferred to the exchange 62. A key h(P) corresponding to the address P of the terminal unit 71 and a key h(S) corresponding to the address S of the terminal unit 74 have been learnt in the exchange 62.

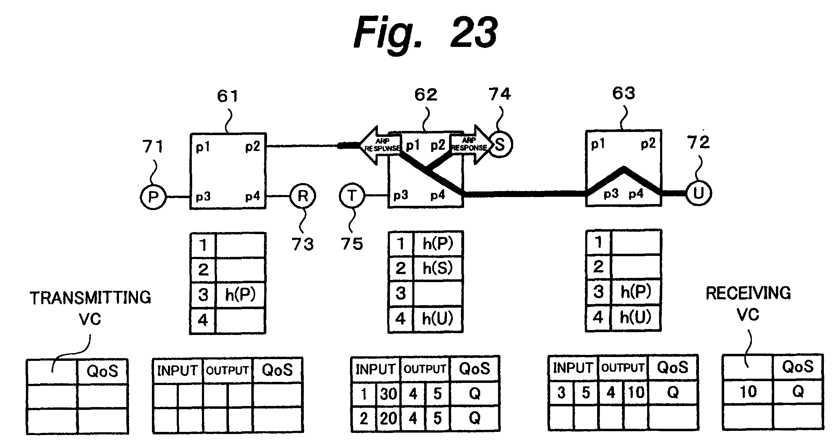

However, as was described above, a collision of keys takes place between these keys (namely, h(P) = h(S)). Thus, a key corresponding to the address P has been learnt for the ports p1 and p2. Consequently, the exchange 62 transfers the ARP response packet to both the ports p1 and p2. At this point, a VC that runs from the port p1 to the port p4 and a VC that runs from the port p2 to the port p4 are created. Thus, the ARP response packet is transferred to the terminal unit 74 through the port p2. However, since the address (S) of the terminal unit 74 is different from the destination address (P), the terminal unit 74 determines that the ARP response packet is not a packet addressed to the terminal unit 74 and destroies it. Thus, the VC that runs from the port p2 to the port p4 is not actually used (refer to Fig. 23).

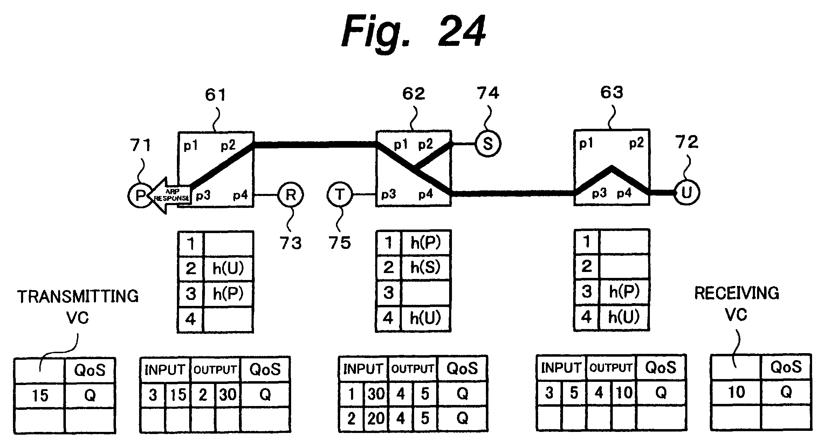

In addition, the ARP response packet is transferred to the exchange 61 through the port p1 of the exchange 62. As with the exchange 62, the exchange 61 creates a VC table. A key corresponding to the address P that is the destination of the ARP response packet has been learnt in the exchange 61. Thus, the ARP response packet is transmitted to the terminal unit 71 whose address is P. The terminal unit 71 creates a transmitting VC with a label of "requested label = 15" and stores the label "15" used for transmitting a packet to the terminal unit 72 to the ARP table (refer to Fig. 24).

The above-described embodiment of the present invention is applied to ATM. In addition, the present invention can be generally applied to a label write type data link.

According to the present invention, in a label rewrite type data link of for example ATM, since an address is learnt, data in the format of packets can be prevented or suppressed from improperly broadcast without need to use a complicated routing control.

For example, when the present invention is applied to ATM, the structure of the protocol can be simplified in comparison with "IP over ATM" using SVC or the like. Thus, the structure of the system can be simplified. In this case, since an address resolution process and a signaling process are performed at the same time, the execution efficiency of the data transferring process for packets or the like can be improved.

In addition, since the present invention can be generally applied to a label rewrite type data link as well as ATM, the above-described effect can be accomplished.

Although the present invention has been shown and described with respect to a best mode embodiment thereof, it should be understood by those skilled in the art that the foregoing and various other changes, omissions, and additions in the form and detail thereof may be made therein without departing from the spirit and scope of the present invention.

## Claims

1. An exchange for performing a data exchanging process in a system having a plurality of terminal units each having a data receiving and processing function for receiving data and performing a predetermined process corresponding to the received data and/or a data generating and transmitting function for generating data and transmitting the generated data, comprising:
destination representing means for performing a signaling process and an address resolution protocol process corresponding to the received data;
a memory for storing information about the operation of said destination representing means; and
data exchanging means, having a plurality of ports for transmitting and/or receiving data, for selecting one of the plurality of ports from which data is transmitted corresponding to the operation result of said destination representing means.

2. The exchange as set forth in claim 1,
wherein said memory stores a table that represents the relation between the port positions of said data exchanging means and the addresses of the terminal units of the system.

3. The exchange as set forth in claim 2,
wherein the table represents the relation between the ports of said data exchanging means and Hash function values corresponding to the addresses.

4. The exchange as set forth in claim 2,
wherein the table represents the relation using a Hash function of a table stored in a memory of another exchange of the system.

5. The exchange as set forth in claim 2,
wherein when an entry registered in said memory elapses for a predetermined time period, the entry is deleted.

6. The exchange as set forth in claim 1,
wherein said destination representing means has table updating means for updating the contents stored in said memory corresponding to the received data.

7. The exchange as set forth in claim 1,
wherein said destination representing means detects a destination address from the received data and controls the destination of data transmitted by said data exchanging means.

8. The exchange as set forth in claim 7,
wherein when said memory stores the relation between the destination address and the ports of said data exchanging means, said destination representing means performs a process for representing a port of said data exchanging means from which the data is transmitted corresponding to the contents stored in said memory.

9. The exchange as set forth in claim 8,
wherein the contents stored in said memory is a table that has Hash function values corresponding to source addresses of the received data, and
wherein when one Hash function value in the table corresponds to two or more addresses, the data is transmitted to the two or more addresses at the same time.

10. The exchange as set forth in claim 8,
wherein the contents stored in said memory is a table that has Hash function values corresponding to source addresses of the received data, and
wherein when one Hash function value in the table corresponds to two or more addresses, the contents stored in said memory are deleted and the type of the Hash function is changed.

11. The exchange as set forth in claim 7,
wherein when said memory does not store the relation between the destination addresses and the ports of said data exchanging means, said destination representing means causes the data to be transmitted to all the ports of said data exchanging means except for the port from which the data has been received.

12. The exchange as set forth in claim 7,
wherein said destination representing means operates without reference to the contents of said memory in a predetermined situation.

13. The exchange as set forth in claim 12,
wherein the predetermined situation is a situation of which a variation takes place in the system.

14. The exchange as set forth in claim 12,
wherein said destination representing means causes the data to be transmitted to all the ports of said exchanging means in the predetermined situation.

15. An address resolution method for a system having a plurality of terminal units each having a data receiving and processing function for receiving data and performing a predetermined process corresponding to the received data and/or a data generating and transmitting function for generating data and transmitting the generated data, comprising the steps of:
(a) performing a signaling process and an address resolution protocol process corresponding to the received data;
(b) storing information about the process at step (a); and
(c) selecting one of a plurality of ports from which data is transmitted corresponding to the result at step (a).
